(19) Europäisches Patentamt
European Patent Office
Office européen des brevets

(11) Veröffentlichungsnummer: **0 092 119**
**A2**

(12) # EUROPÄISCHE PATENTANMELDUNG

(21) Anmeldenummer: **83103418.6**

(22) Anmeldetag: **08.04.83**

(51) Int. Cl.³: **C 09 B 67/26**, D 06 P 1/38

(30) Priorität: **21.04.82 US 370426**

(43) Veröffentlichungstag der Anmeldung: **26.10.83**
**Patentblatt 83/43**

(84) Benannte Vertragsstaaten: **CH DE FR GB LI**

(71) Anmelder: **BAYER AG, Zentralbereich Patente, Marken und Lizenzen, D-5090 Leverkusen 1, Bayerwerk (DE)**
Anmelder: **Mobay Chemical Corporation, Penn Lincoln Parkway West, Pittsburgh, Pennsylvania 15205 (US)**

(72) Erfinder: **Hoguet, Robert G., 209 Smythe Drive, Summerville South Carolina 29483 (US)**
Erfinder: **Kalz, Dietmar, Dr., 114 Ashborough Avenue, Summerville South Carolina 29483 (US)**
Erfinder: **Thomas, Thomas J., 213 Brailsford Avenue, Summerville South Carolina 29483 (US)**
Erfinder: **Whetsell, Henry T., 113 Daffodil Street, Summerville South Carolina 29483 (US)**
Erfinder: **Wolff, Joachim, Dr., Neuenhauserweg 6, D-5060 Bergisch-Gladbach 2 (DE)**
Erfinder: **Nonn, Konrad, Dr., Otto-Stange-Strasse 17, D-5090 Leverkusen 1 (DE)**
Erfinder: **Wolf, Karlheinz, Dr., Paul-Klee-Strasse 77, D-5090 Leverkusen 1 (DE)**

(54) **Konzentrierte fliessfähige Formulierungen kaltfärbender Faser-Reaktivfarbstoffe.**

(57) Die vorliegende Offenbarung betrifft lagerbeständige, konzentrierte, fließfähige wäßrige Dispersionen wasserlöslicher, kaltfärbender Faser-Reaktivfarbstoffe. Diese Dispersionen enthalten anionische oder Polyvinyl-Dispergiermittel, die ihnen Beständigkeit gegenüber dem Absetzen oder einer Agglomeration verleihen, und wasserlösliche Elektrolyten, die die faserreaktiven Gruppen hydrolysebeständig machen. Die Dispersionen weisen eine mittlere Teilchengröße von weniger als 100 µm auf und enthalten in einer bevorzugten Ausführungsform eine ausreichende Menge Puffermittel, um den pH auf einen Wert zwischen etwa 5 und 8 zu stabilisieren.

EP 0 092 119 A2

BAYER AKTIENGESELLSCHAFT
Zentralbereich Patente,
Marken und Lizenzen
D 5090 Leverkusen, Bayerwerk

MOBAY CHEMICAL COPORATION
Patent Department
Penn Lincoln Parkway West
Pittsburgh, Pennsylvania
15205, USA

0092119



# Konzentrierte fließfähige Formulierungen kaltfärbender Faser-Reaktivfarbstoffe

Die vorliegende Erfindung betrifft konzentrierte fließfähige Formulierungen von Faser-Reaktivfarbstoffen, die sowohl lagerbeständig als auch leicht löslich in wäßrigen Färbebädern sind. Diese Formulierungen basieren auf solchen Reaktivfarbstoffen, die auf Textilsubstrate unter minimalem Wärmeaufwand aufziehen und dementsprechend als "Kaltfärber" bekannt sind.

Traditionell sind Farbstoffe als trockene Pulver verfügbar, die zwangsläufig mit zahlreichen Nachteilen behaftet sind. Derartige Pulver sind staubig, wodurch gesundheitliche Gefahren aufgrund des Einatmens durch die damit Arbeitenden bedingt werden und auch eine gegenseitige Verunreinigung des einen Farbstoffs durch den Staub eines anderen verursacht wird. Daneben erfordern diese Pulver eine beträchtliche Energie und einen beträchtlichen Aufwand, um sie in den wäßrigen Färbebädern aufzulösen, die typischerweise in der Textilfärbeindustrie verwendet werden. Weiterhin kann die Form eines Pulvers nicht ohne weiteres für die automatische Dosierung und Förderung hergerichtet werden, wodurch ihr Einsatz beim Verbraucher arbeitsintensiv und damit

im Vergleich zu dem Potential, das die modernen Techniken der Materialförderung und -handhabung anbieten, unrentabel wird. Schließlich ist auch das Trocknen der Farbstoffe, die in Form eines nassen Filterkuchens aus ihrem Synthesebad gewonnen werden, ein energieintensiver Arbeitsgang. Infolgedessen erhöht die Notwendigkeit, Farbstoffe auf diese Form eines getrockneten Pulvers zurückzuführen, deren Herstellungskosten in beträchtlichem Maße.

In Anbetracht dieser Schwierigkeiten wird eine erhebliche Anzahl von Farbstoffen verschiedener Klassen in flüssiger Form formuliert. Einige Typen, etwa die in der US-PS 4 071 312 offenbarten, wurden einfach in Wasser aufgelöst. Jedoch besitzen einige Farbstofftypen entweder eine für die Herstellung technisch bedeutsamer Konzentrationen unzureichende Löslichkeit oder eine Neigung, mit Wasser oder den üblicherweise für Farbstoff-Formulierungen verwendeten Lösungsmitteln, wenn nicht sofort, dann während der Lagerung oder des Versands, zu reagieren. Zum ersteren Typ zählen die anionischen Farbstoffe, die in der US-PS 3 770 371 durch Zusatz von genügend Salz, wodurch diese Farbstoffe praktisch unlöslich gemacht werden, zu Dispersionen formuliert werden. Eine weitere, in der US-PS 4 110 073 offenbarte Entwicklung besteht in der Verwendung solcher Konzentrationen anionischer Farbstoffe, die deutlich über deren normaler Löslichkeit in Wasser liegen, in Verbindung mit hohen Gehalten an ausgewählten oberflächenaktiven Mitteln, darunter Ligninsulfonaten.

Beide Arbeitsweisen, in Lösung und in Dispersion, gelangen auch bei Faser-Reaktivfarbstoffen zur Anwendung,

d.h. solchen Farbstoffen, die Gruppen tragen, die zur Ausbildung einer covalenten Bindung mit dem Textilsubstrat, das mit ihnen gefärbt wird, insbesondere Cellulose, befähigt sind. Die Methode des Arbeitens in Lösung ist allgemein auf diejenigen Farbstoffe beschränkt, die einigermaßen hohe Temperaturen (oberhalb von etwa 60°C bis 80°C) benötigen, um die Fixierung an dem Textilsubstrat herbeizuführen. Dementsprechend sind solche Farbstoffe als "Heißfärber" bzw. "Warmfärber" bekannt. Die Anwendung der Methode des Arbeitens in Lösung auf Heißfärber und Warmfärber in Verbindung mit sorgfältiger pH-Kontrolle durch Puffer ist in der US-PS 4 072 463 offenbart. Die geringe Reaktivität der faserfixierenden Gruppen dieser Farbstoffe bei Raumtemperatur in Verbindung mit der sorgfältigen pH-Kontrolle reichen offenkundig aus, um eine nennenswerte Hydrolyse dieser faserreaktiven Gruppen durch das Lösungsmittel Wasser zu verhindern. Die Methode des Arbeitens in Dispersion wurde sowohl in den US-PSen 3 770 371 und 4 110 073 auf solche "Heißfärber" als auch in der US-PS 4 264 323 auf "Kaltfärber" angewandt.

Diese "Kaltfärber" sind von besonderem Interesse wegen ihrer Fähigkeit, durch Einstellung des Färbebades auf alkalische Bedingungen bei mäßigen Temperaturen auf Textilsubstrate aufzuziehen. Jedoch macht sie ihre hohe Reaktivität gegenüber den Hydroxyl-Gruppen von Cellulose oder anderen Textilsubstraten, die dieses Färben bei niedriger Temperatur ermöglicht, auch in hohem Maße hydrolyseempfindlich, wann immer sie der Einwirkung von Wasser ausgesetzt werden, einschließlich desjenigen Zeitraums vor ihrer Zugabe zu einem wäßrigen Färbebad zur endgültigen Verwendung.

Die US-PS 4 264 323 schlägt die Herstellung von Dispersionen solcher "Kaltfärber" in gesättigten Lösungen des jeweiligen Farbstoffs vor. Diese Formulierungen sind zwar offenkundig über die erforderlichen Zeitspannen hinweg bei "Raumtemperatur" lagerfähig, jedoch wird über ihre Beständigkeit unter dem Bereich thermischer Bedingungen, die tatsächlich in der Praxis herrschen, nichts mitgeteilt. Es ist insbesondere nicht möglich, daraus zuverlässig zu schließen, daß derartige Dispersionen sowohl gegen Hydrolyse als auch gegen Absetzen oder Agglomeration beständig sind, wenn sie dem Temperaturcyclus ausgesetzt werden, der durch den Wechsel zwischen Tag- und Nachttemperaturen in den verschiedenen Klimazonen bedingt wird. Auch wenn diese Formulierungen sorgfältig alle Dispersionsmittel oder andere Additive ausschließen, die Gruppen tragen, die potentiell gegenüber ihren faserfixierenden Gruppen reaktiv sind, so bleibt doch die signifikante Möglichkeit der Hydrolyse mit ihrem wäßrigen Medium aufgrund der Einwirkung erhöhter Temperaturen während der Lagerung oder des Transports in den Sommermonaten.

Die DE-PS 2 843 015 schlägt Formulierungen solcher "Kaltfärber" in wäßrigen Lösungen von Neutralsalzen oder Salzen schwacher Säuren unter Bildung von Dispersionen der Farbstoffe vor. Anscheinend gibt es keine Diskussion einer möglichen Hydrolyse mit dem suspendierenden Medium Wasser, sondern auf Seite 5, Zeilen 25

bis 29, nur eine Erörterung, daß die offenbarte Arbeitsweise vorteilhaft ist, weil die typischerweise zur Formulierung flüssiger Färbemittel verwendeten primären und sekundären Alkohole gegenüber den faserfixierenden Gruppen dieser Farbstoffe reaktiv sind. Es wird mitgeteilt, daß die Dispersionen sich im Laufe einiger Wochen absetzen, jedoch durch Rühren ohne weiteres wieder dispergierbar seien. Es wird ebenfalls mitgeteilt, daß die Dispersionen zu "heißem" Wasser hinzugegeben oder mit Wasserdampf erhitzt werden müssen, um sie in wäßrigen Färbebädern aufzulösen. Es wird auch mitgeteilt, daß diese Dispersionen "beständig" gegen Hitze und Frost seien.

Infolgedessen besteht ein Bedarf für lagerbeständige, flüssige, konzentrierte Dispersionen "kaltfärbender" wasserlöslicher Faser-Reaktivfarbstoffe. Diese Dispersionen müssen Beständigkeit aufweisen sowohl gegen Hydrolyse ihrer faserreaktiven Gruppen als auch gegen Absetzen oder Agglomeration ihrer dispergierten Farbstoff-Teilchen. Sie sollten auch leicht fließfähig sein, vorzugsweise ohne nennenswertes Rühren. Während der Lagerung unter Praxisbedingungen sollten diese Dispersionen keine nachweisliche Minderung ihres Färbepotentials infolge Hydrolyse ihrer faserreaktiven Gruppen erfahren und dadurch keinen Verlust ihrer Fähigkeit zur Ausbildung chemischer Bindungen mit geeigneten Textilsubstraten erleiden. Weiterhin sollten sie für eine Lagerung über längere Zeiträume hinweg geeignet sein, ohne daß dabei in merklichem Umfang ein Absetzen oder eine Agglomeration eintreten, und schlimmstenfalls sollte nur milderes Rühren erforderlich sein, um ihre Fließfähigkeit in vollem Maße herzustellen.

Zu den Praxisbedingungen, denen technisch verwendete Farbstoffe tatsächlich ausgesetzt sind, zählen Temperaturcyclen, die ein besonders harter Test für die Beständigkeit derartiger Dispersionen sein können. Solche Dispersionen können typischerweise während des Transports oder der Lagerung weitreichende Temperaturänderungen zwischen den Tag- und Nachtwerten erfahren. Wenn sich der dispergierte Farbstoff bei der erhöhten Tagestemperatur in merklichem Umfang auflöst, kann er bei der Abkühlung auf die Nachttemperatur sich auf den dispergierten Farbstoff-Teilchen niederschlagen und dadurch eine Erhöhung der mittleren Teilchengröße verursachen (ein Vorgang, der als "Ostwald-Reifung" bekannt ist). Eine merkliche Änderung der mittleren Teilchengröße kann zur Folge haben, daß die Dispersion sich absetzt oder agglomeriert.

Dieses Problem ist von besonderer Bedeutung für diese "kaltfärbenden" Faser-Reaktivfarbstoffe, da diese normalerweise eine hohe Löslichkeit in Wasser besitzen. Es ist erwünscht, daß sich diese Farbstoffe unter nur leichtem Rühren und bei milden Temperaturen leicht auflösen, wenn die Dispersion einem wäßrigen Färbebad zugesetzt und dabei stark verdünnt wird. Diese "kinetische Löslichkeit" ist eine Folge sowohl der thermodynamischen Löslichkeit des Farbstoff-Moleküls als auch einer geringen Größe der dispergierten Teilchen. Leider begünstigen diese beiden Faktoren auch die "Ostwald-Reifung" der Dispersion.

Überraschenderweise wurde gefunden, daß wäßrige Dispersionen kaltfärbender, wasserlöslicher, Faser-Reaktivfarbstoffe mit niedriger Teilchengröße (unterhalb von

100 µm) in technisch vorteilhaften Konzentrationen so hergestellt werden können, daß sie eine überlegene kinetische Löslichkeit in dem letzten Färbebad aufweisen und dennoch eine überlegene Beständigkeit sowohl gegen Hydrolyse ihrer faserreaktiven Gruppen als auch gegen das Absetzen oder die Agglomeration ihrer Teilchen besitzen, indem in wohldosierter Weise ein Elektrolyt, etwa gewöhnliches Salz, und ein Dispergiermittel, etwa Natriumligninsulfonat, zugesetzt werden.

Die vorliegende Erfindung betrifft konzentrierte, fließfähige, lagerbeständige wäßrige Dispersionen wasserlöslicher kaltfärbender Faser-Reaktivfarbstoffe mit überlegener "kinetischer Löslichkeit" in wäßrigen Färbebädern, die

A) etwa zwischen 10 und 50 Gew.-% mindestens eines Farbstoffs mit einer mittleren Teilchengröße unter etwa 100 µm der allgemeinen Formel

$$(MO_3S)_n-Z-\underset{R^1}{\underset{|}{N}}-R \qquad (1)$$ ,

in der

- M Li$^+$, Na$^+$, K$^+$, NH$_4^+$ oder das Kation eines organischen Amins,
- n eine ganze Zahl von 1 bis 5,
- Z ein Farbstoff-Chromophor-System,
- $R^1$ H oder Alkyl ($C_1$-$C_4$) und
- R eine faserreaktive Gruppe einer der nachstehenden Strukturen

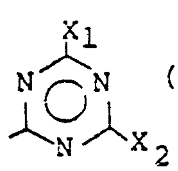 (2)

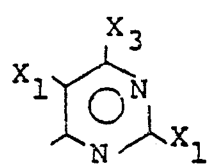 (3)

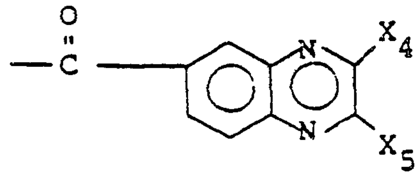 (4)

bezeichnen, in denen

$X_1$ = Cl, F (jedoch F, falls $X_2$ nicht F oder Cl ist),

$X_2$ = Cl, F, $NH_2$, $NHR^2$, $OR^2$, $SR^2$, $-CH_2R^2$,

$X_3$ = Cl, F, $CH_3$,

$X_4$ = Cl, F,

$X_5$ = Cl, F, $CH_3$,

mit der Maßgabe, daß in Formel (3) mindestens ein F einem der heterocyclischen Stickstoff-Atome benachbart ist, und worin

$R^2$ = Alkyl substituiert durch OH, $SO_3H$, COOH oder $C_1$- bis $C_4$-Alkoxy,
Aryl substituiert durch $SO_3H$, $C_1$- bis $C_4$-Alkyl oder $C_1$- bis $C_4$-Alkoxy,
Aralkyl substituiert durch $SO_3H$, $C_1$- bis $C_4$-Alkyl oder $C_1$- bis $C_4$-Alkoxy

bezeichnet,

B) eine genügende Menge eines Dispergiermittels ausgewählt aus der Gruppe anionischer Dispergiermittel und Vinylpolymerer, die aus Monomeren der Formel

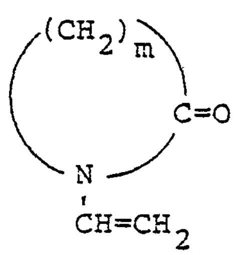

(5)

synthetisiert wurden, in der

m eine ganze Zahl von 3 bis 5 bezeichnet,

um ein wesentliches Absetzen oder eine wesentliche Agglomeration der Dispersion im Laufe von drei Wochen unter Temperaturcyclen von 20°C bis 50°C zu verhindern und

C) eine genügende Menge eines wasserlöslichen Elektrolyten enthält.

Die Dispersion können außerdem Puffermittel und andere Formulierungshilfsmittel enthalten.

Die wäßrigen Dispersionen der vorliegenden Erfindung enthalten vorzugsweise

a) 10 bis 50 Gew.-%, besonders bevorzugt 15 bis 40 Gew.-%, des Farbstoffs,

b) 0,1 bis 25 Gew.-%, besser noch 2 bis 15 Gew.-% und besonders bevorzugt 2 bis 5 Gew.-%, des Dispergiermittels,

c) 1 bis 30 Gew.-%, besonders bevorzugt 4 bis 25 Gew.-%, des Elektrolyten,

d) 0,1 bis 3 Gew.-%, besonders bevorzugt 0,2 bis 1 Gew.-%, des Puffers und

e) 0 bis 20 Gew.-%, besonders bevorzugt 0 bis 10 Gew.-% anderer Zusätze.

Für den bevorzugten Farbstoff der Formel (1) steht n für 1 bis 4; Z steht für einen Farbstoff-Chromophor aus der Klasse der metallfreien oder metallhaltigen Mono- oder Polyazofarbstoffe, metallfreien oder metallhaltigen Azoporphinfarbstoffe, z.B. der Kupfer-, Kobalt- oder Nickel-Phthalocyaninfarbstoffe, Anthrachinon-, Oxazin-, Dioxazin-, Triphenylmethan-, Nitro-, Azomethin- oder der metallfreien oder metallhaltigen Formazan-Farbstoffe.

Besonders bevorzugt werden Azo-, Anthrachinon- und Phthalocyaninfarbstoffe. R steht vorzugsweise für einen der nachstehenden Substituenten:

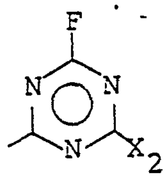

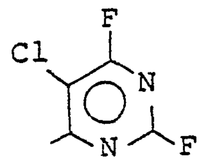

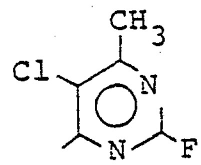

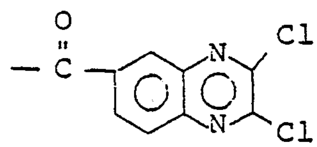

Als anionische Dispergiermittel (Bestandteil B) können die folgenden Produkte verwendet werden: Alkylsulfonate; sulfatierte ungesättigte Fettsäuren; Sulfonate von Polycarbonsäureestern; Alkylbenzolsulfonate; sulfatierte aliphatische Alkohole; Kondensationsprodukte aus Ethylenoxid und Aminen, Fettsäuren, Phenole oder Alkohole, die anschließend mit mehrbasischen anorganischen Säuren, z.B. Phosphorsäure oder Schwefelsäure zu den entsprechenden Estern umgesetzt werden. Bevorzugte Dispergiermittel sind die Kondensationsprodukte aromatischer Sulfonsäuren mit Formaldehyd oder Kondensationsprodukte von Ketonen mit Hydrogensulfit und Formaldehyd. Besonders bevorzugt werden Ligninsulfonate oder deren Derivate und von diesen wiederum die Natriumsalze mit niedrigem oder fehlendem Zuckergehalt, Molekulargewichten zwischen 5 000 und 50 000 und zwischen 0,5 und 5 Sulfonsäure-Gruppen pro 1 000 Molekulargewichtseinheiten. Spezielle Beispiele für anionische Dispergiermittel sind: Natriumdodecylsulfonate, Natriumlaurylsulfate, Natriumdodecylbenzolsulfonat,

Dibutylnaphthalinsulfonat, saure Schwefelsäureester der Kondensationsprodukte von 2 mol Ethylenoxid mit 1 mol Nonylphenol, Natriumdioctylsulfosuccinat, Kondensationsprodukte aus Cresol, $NaHSO_3$ und Formaldehyd, Kondensationsprodukte aus 2-Hydroxynaphthalin-6-sulfonsäure mit Formaldehyd, Sulfonsäuren von Kondensationsprodukten aus Naphthalin, Terphenyl oder Ditolylether mit Formaldehyd und Kondensationsprodukte aus Cyclohexanon mit Formaldehyd und $NaHSO_3$. Sämtliche anionischen oberflächenaktiven Mittel werden vorzugsweise in Form ihrer Alkali- und/oder Ammoniumsalze verwendet.

Eine beträchtliche Anzahl dieser Verbindungen und zusätzliche Produkte, die als anionische oberflächenaktive Mittel betrachtet werden können, werden in K. Lindner, Tenside-Textilhilfsmittel-Waschrohstoffe, Band 1, Seiten 571-835 (1964), beschrieben.

Als durch die Formel (4) beschriebene Vinylpolymere werden (als Bestandteil B) vorzugsweise Polyvinylpyrrolidone verwendet, und besonders ein Polyvinylpyrrolidon mit einem K-Wert zwischen 15 und 100, besonders bevorzugt zwischen 15 und 50, bestimmt aufgrund der Messung der relativen Viskosität, ist in Betracht zu ziehen. /¯Zur Bestimmung des Viskositätskoeffizienten K: Modern Plastics, Band 23, Nr. 3, Seiten 157-161, 212, 214, 216, 218 (1945)_7.

Als wasserlösliche Elektrolyten (Bestandteil C) werden vorzugsweise die Ammonium- oder Alkalisalze anorganischer ein- oder mehrbasischer Säuren, z.B. HCl, $H_2SO_4$, verwendet. Alkali- oder Ammoniumsalze organischer Säuren, z.B. Essigsäure oder Oxalsäure, können ebenfalls

verwendet werden. Die Salze können entweder den Farbstoff-Dispersionen zugesetzt werden, oder sie können bereits in den Farbstoffen aus deren Herstellungsverfahren vorhanden sein. Beispiele für geeignete Salze sind LiCl, $Li_2SO_4$, NaCl, $Na_2SO_4$, KCl, $K_2SO_4$, $NH_4Cl$ und $(NH_4)_2SO_4$.

Als Puffermittel können Verbindungen eingesetzt werden, die nicht mit der reaktiven Gruppe des Farbstoffs reagieren können und den pH-Wert in einem Bereich etwa zwischen 5 und 8 stabilisieren, z.B. Alkaliborate, -acetate und -oxalate, saure Alkaliphosphate, Alkaliphosphat sowie Gemische aus diesen. Bevorzugt werden Mischungen aus ein- und zweibasischen Alkaliphosphaten.

Weitere Zusatzstoffe sind beispielsweise Konservierungsmittel, Feuchthaltemittel, Entschäumungsmittel und Verdickungsmittel.

Konservierungsmittel sind Produkte, die beispielsweise die Bildung von Schimmel und/oder das Bakterienwachstum hemmen. Geeignete Produkte sind Natriumpentachlorophenolat, Kondensationsprodukte aus Paraformaldehyd mit aromatischen Alkoholen, insbesondere mit Benzylalkohol, und/oder Formaldehyd-Lösungen. Konservierungsmittel werden im allgemeinen in Mengen von 0 bis 3 Gew.-%, vorzugsweise in Mengen von 0,05 bis 0,5 Gew.-%, zugesetzt.

Als Feuchthaltemittel werden die gebräuchlichen Substanzen, die das Austrocknen verhindern, in Mengen von 0 bis 20 Gew.-%, vorzugsweise von 5 bis 10 Gew.-%, verwendet. Geeignete Feuchthaltemittel sind beispielsweise Formamide und Glycolether.

Als Verdickungsmittel können die folgenden verwendet werden: Natürliche Gummiarten wie Guar-Gummi, Alginate, Johannisbrot-Gummi, Gummiarabicum, Ethylcellulose-Produkte, Acrylate, Methacrylate oder, fein dispergiert, Silicagel und Magnesium- oder Aluminiumsilicate.

Als Entschäumungsmittel können die in der Farbstoffchemie gebräuchlichen Entschäumungsmittel eingesetzt werden, z.B. Tributylphosphat, Alkylbernsteinsäureanhydrid kombiniert mit aliphatischen Ölen, Methylpolysiloxane mit $C_2$- bis $C_4$-Alkoxy-Gruppen in Kombination mit fein dispergiertem Siliciumdioxid sowie wasserunlösliche organische Flüssigkeiten, z.B. Mineralöle, chlorierte Mineralöle, flüssige Trifluorovinylchlorid-Polymerisate im Gemisch mit hydrophobem, fein dispergiertem Siliciumdioxid, wie in "Ullmanns Encyklopädie der technischen Chemie", 4.Aufl., Band 20, beschrieben ist.

Die Herstellung der Dispersionen gemäß der vorliegenden Erfindung wird folgendermaßen durchgeführt: Die Verbindungen werden in Wasser zusammen gemischt, und die Teilchengröße wird vermindert, beispielsweise mittels eines Hochgeschwindigkeitsrührers oder einer der üblichen Naßmahlanlagen. Geeignete Apparaturen für die Naßvermahlung sind beispielsweise eine Rotor-Stator-Mühle, etwa eine Carborund-Rotor-Stator-Mühle, ein Dissolver, ein Hochdruck-Homogenisator, etwa eine Manton-Gaulin-Mühle, oder eine schnellaufende Rührwerkskugelmühle mit Glasperlen vom Durchmesser von 0,3 mm bis 20 mm.

Die Dispersionen gemäß der vorliegenden Erfindung besitzen im allgemeinen eine Teilchengröße zwischen etwa 0,5 und 100 µm, vorzugsweise zwischen etwa 1 und 50 µm,

und besonders bevorzugt wird eine mittlere Teilchengröße zwischen 1 und 10 µm. Ein bevorzugter Weg für die Herstellung der Dispersionen besteht darin, daß zunächst die Bestandteile B) und C) in Wasser gegeben werden, danach der Farbstoff hinzugefügt wird und anschließend die Naßvermahlung zur Erzielung der geeigneten Korngrößenverteilung durchgeführt wird.

In der vorliegenden Erfindung sorgt der Zusatz des Elektrolyten dafür, daß die faserreaktiven Gruppen des dispergierten Farbstoffs unter den normalerweise während der Lagerung und des Versands herrschenden Bedingungen praktisch nicht reaktionsfähig sind. Die rührt wahrscheinlich daher, daß der Farbstoff in der wäßrigen Lösung des Elektrolyten nur eine vernachlässigbar geringe Löslichkeit besitzt.

Die Präparate gemäß der vorliegenden Erfindung zeigen eine überlegene Lagerbeständigkeit bei erhöhten Temperaturen und auch bei Umgebungsbedingungen. Ein Zusatz von Puffern, wenngleich nicht unbedingt notwendig, erhöht diese Lagerbeständigkeit noch weiter. Typische Proben dieser Präparate zeigen eine unveränderte Farbtönung und -intensität, nachdem sie drei Wochen lang Temperaturcyclen von jeweils 8 h bei 50°C und 16 h bei 20°C (Simulation des Tag-Nacht-Temperaturwechsels, der

im Sommer beim Transport oder der Lagerung in unklimatisierten Räumen zu erwarten ist) oder 6 Monate lang der Einwirkung einer Temperatur von 25°C ausgesetzt wurden. Diese Beständigkeit wurde sowohl durch färberische Anwendungen als auch durch chromatographische Analysen nachgewiesen.

Diese Präparate besitzen eine überlegene "kinetische Löslichkeit", worunter zu verstehen ist, daß sie sich leicht bei milden Temperaturen (so niedrig wie die Raumtemperatur, etwa 20°C) und mit Hilfe nur milden Rührens in wäßrigen Färbebädern leicht auflösen lassen. Die Verdünnung mit Wasser, die beim Zusatz der typischerweise verwendeten Mengen zum Färbebad stattfindet, führt normalerweise zur Bildung echter Lösungen des Farbstoffs und zur Erzielung von Färbeeigenschaften, die denjenigen, die andersartige Präparate ergeben, gleichwertig sind.

Diese Präparate besitzen ebenfalls eine gute Fließfähigkeit, und selbst wenn sie sich etwas thixotrop verhalten, werden sie auch nach längerer Lagerung durch lediglich mildes Rühren frei fließend. Vorzugsweise besitzen sie Viskositäten von weniger als etwa 5000 cP bei 20°C, bevorzugt von weniger als etwa 4000 cP und besonders bevorzugt von weniger als etwa 2000 cP.

Diese Präparate eignen sich für die üblichen Verwendungszwecke der Faser-Reaktivfarbstoffe, darunter das Färben und Bedrucken von Wolle, natürlicher oder regenerierter Cellulose oder Fasergemischen, die eine oder mehrere der genannten Faserarten enthalten.

In dem folgenden Text bezeichnen die Prozentzahlen ausschließlich Gewichtsprozent.

## B e i s p i e l e

### Beispiel I

Eine Formulierung auf der Basis des nachstehenden Farbstoffs

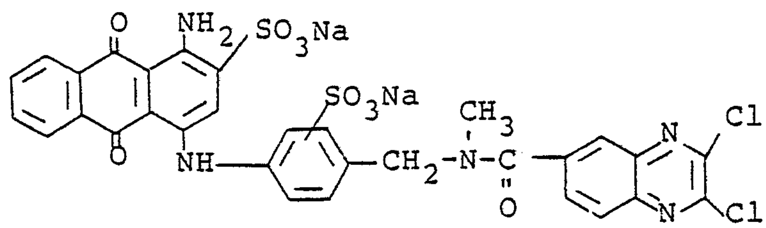

(I)

und mit der nachstehenden Zusammensetzung

31,5 % Farbstoff (enthaltend 8 % einer Mischung aus NaCl und $Na_2SO_4$),
3,0 % Dispergiermittel auf Ligninsulfonat-Basis (Lignosol(R) DXD von Reed, Ltd., of Canada),
15,0 % NaCl,
0,2 % $KH_2PO_4$,
0,2 % $K_2HPO_4$ und
50,0 % Wasser

wurde wie folgt hergestellt:
500 g Wasser, 150 g Natriumchlorid, 30 g eines Lignosulfonats und jeweils 2 g Kaliumdihydrogen- und Dikaliumhydrogenphosphat werden 30 min in einem 1500 ml-Becherglas gemischt. 290 g Farbstoff (die zusätzlich 25 g eines Salzgemischs aus Natriumchlorid und Natriumsulfat enthalten) werden in die Lösung gegeben, und die entstandene Dispersion wird gut homogenisiert. Mit Hilfe einer Rotor-Stator-Mühle, eines Druck-Homogenisators oder einer Glaskugel- oder Sandmühle wird die Mischung vermahlen und dispergiert, bis die mittlere Teilchengröße unter 6 µm liegt.

Die Viskosität der Dispersion wurde mit einem Brookfield-Viskosimeter Modell RVP bei 20°C und einer Drehgeschwindigkeit von 20/min zu 200 cP bestimmt.

Die Beständigkeit dieser Dispersion wurde dadurch geprüft, daß sie während eines Zeitraums von drei Wochen Temperaturcyclen von jeweils 8 h bei 50°C und danach 16 h bei 20°C ausgesetzt wurde. Kein nennenswertes Absetzen oder Eindicken wurde beobachtet. Die Farbintensität war derjenigen der frisch hergestellten (annähernd eine Woche alten) Formulierzung äquivalent.

Färbungen wurden mit frisch hergestellten und dem Temperaturcyclus ausgesetzten Formulierungen sowohl mittels des Ausziehprozesses als auch des Klotz-Dämpfverfahrens (Klotze-Trocknen-Thermosolieren-chemisches Fixieren (pad-dry-thermosol-chemical pad-steam process)) hergestellt. Im ersteren Fall wurde mit einem Flottenverhältnis von 1 : 20, Zusätzen von 10 g/l Glaubersalz und 10 g/l wasserfreie Soda sowie 90 min bei etwa 40°C gearbeitet. Es wurde eine ausreichende Menge Dispersion verwendet, um ein Pulveräquivalent von etwa 2 Gew.-%, bezogen auf das Gewicht der zu färbenden Baumwollwaren, vorzugeben. Im letzteren Fall wurde ein Pulveräquivalent von 14,98 g/l (2 ounces per gallon) zur Färbung von zu 100 % aus Baumwolle bestehendem Textilmaterial und solchem aus Baumwolle/Polyester (65 %/ 35 %) verwendet. In allen drei Fällen entsprachen die Färbungen aus den dem periodischen Temperaturwechsel ausgesetzten Formulierungen denjenigen aus den frisch hergestellten Formulierungen.

Beispiel II

Eine Formulierung auf der Basis des nachstehenden Farbstoffs

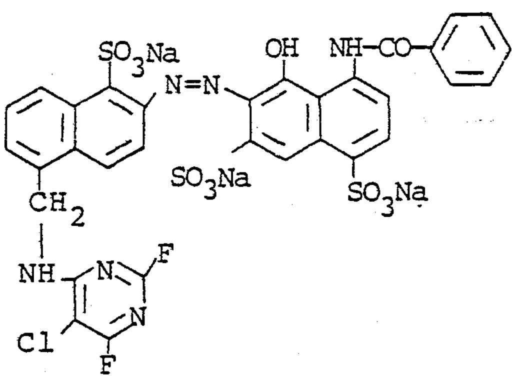

(II)

und mit der nachstehenden Zusammensetzung

23,1 % Farbstoff (enthaltend 18 % NaCl),
3,0 % Dispergiermittel auf Ligninsulfonat-Basis,
15,0 % NaCl,
0,2 % $KH_2PO_4$,
0,2 % $K_2HPO_4$ und
58,5 % Wasser

wurde in der gleichen Weise hergestellt und geprüft wie in Beispiel I beschrieben.

Diese Formulierung hatte eine Viskosität von 1325 cP und zeigte keinerlei Nachlassen der Farbintensität in allen drei Färbetests.

Zur Untersuchung der Wirkung des Elektrolyt- und Dispergiermittel-Gehaltes auf die Hydrolyse der faserreaktiven Gruppe wurden vier Varianten dieser Formulierung hergestellt. Die Hydrolyse wurde gemessen am Verlust der Farbintensität aufgrund visueller Bestimmung nach Färbung mittels des in Beispiel I beschriebenen Ausziehprozesses.

| | Verlust an Farbintensität nach 1 Woche Temperaturcyclen zwischen 20°C (16 h) und 50°C (8 h) |
|---|---|
| 3 Gew.-% Dispergiermittel | |
| 15 Gew.-% NaCl zugesetzt | 0 % |
| 1 Gew.-% NaCl zugesetzt | 13 % |
| 15 Gew.-% Dispergiermittel | |
| 15 Gew.-% NaCl zugesetzt | 6 % |
| 1 Gew.-% NaCl zugesetzt | 16 % |

Beispiel III

Eine Formulierung auf der Basis des nachstehenden Farbstoffs

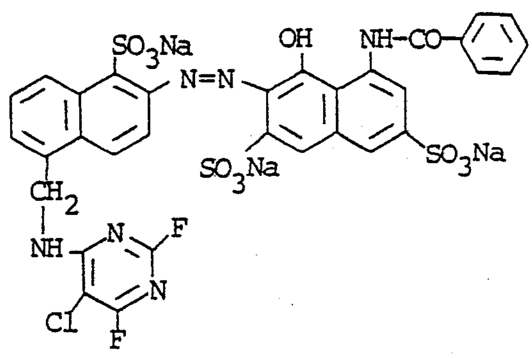

(III)

und mit der nachstehenden Zusammensetzung

17,5 % Farbstoff (enthaltend 20 % NaCl),
3,0 % Dispergiermittel auf Ligninsulfonat-Basis,
15,0 % NaCl,
0,2 % $KH_2PO_4$,
0,2 % $K_2HPO_4$ und
64,1 % Wasser

wurde in der gleichen Weise hergestellt und geprüft wie in Beispiel I beschrieben.

Diese Formulierung hatte eine Viskosität von 450 cP und zeigte keinerlei Nachlassen der Farbintensität in allen drei Färbetests.

Beispiel IV

Eine Formulierung auf der Basis des nachstehenden Farbstoffs

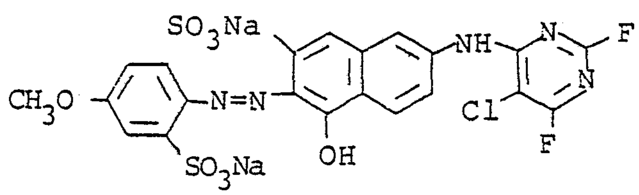

(IV)

und mit der nachstehenden Zusammensetzung

21,8 % Farbstoff (enthaltend weniger als 5 % NaCl),
3,0 % Dispergiermittel auf Ligninsulfonat-Basis,
15,0 % NaCl,
0,2 % $KH_2PO_4$,
0,2 % $K_2HPO_4$ und
59,8 % Wasser

wurde in der gleichen Weise hergestellt und geprüft wie in Beispiel I beschrieben.

Diese Formulierung hatte eine Viskosität von 900 cP und zeigte keinerlei Nachlassen der Farbintensität in allen drei Färbetests.

Beispiel V

Eine Formulierung auf der Basis des nachstehenden Farbstoffs

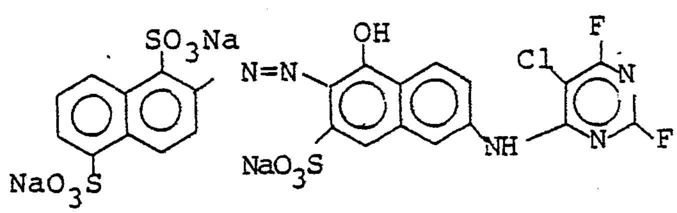

(V)

und mit der nachstehenden Zusammensetzung

26,8 % Farbstoff (enthaltend 15 % NaCl),

7,5 % Kondensationsprodukt aus sulfoniertem Ditolylether mit Formaldehyd,

0,5 % Phosphatpuffer (pH 6,5) und

65,2 % Wasser

wurde wie folgt hergestellt:

625 g Wasser, 5 g Phosphatpuffer und 75 g des Reaktionsproduktes aus sulfoniertem Ditolylether und Formaldehyd werden 30 min in einem Dissolver mit 268 g des Farbstoffs, die 40 g Natriumchlorid enthielten, gemischt. Anstelle eines Dissolvers liefert eine Feinstmahleinrichtung aus Carborund ähnliche Ergebnisse.

Beispiel VI

Eine Formulierung auf der Basis des nachstehenden Farbstoffs

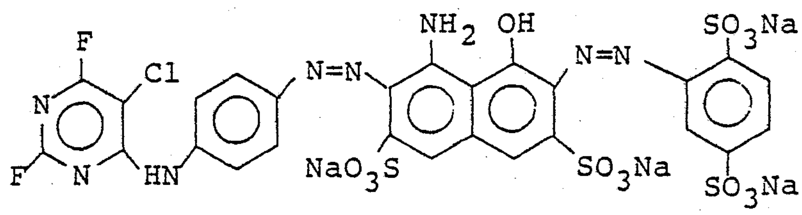

(VI)

und mit der nachstehenden Zusammensetzung

42,5 % Farbstoff (enthaltend 15 % NaCl),
7,5 % Kondensationsprodukt aus sulfoniertem Ditolylether mit Formaldehyd,
5 % Polyvinylpyrrolidon mit einem K-Wert von 17,
0,5 % Phosphatpuffer (pH 6,5) und
44,5 % Wasser

wurde in der gleichen Weise hergestellt wie in Beispiel V beschrieben.

Beispiel VII

Eine Formulierung auf der Basis des nachstehenden Farbstoffs

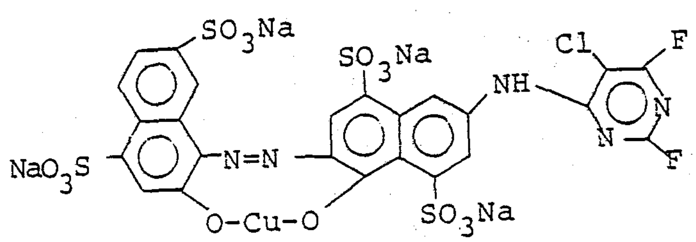

(VII)

und mit der nachstehenden Zusammensetzung

19,1 % Farbstoff (enthaltend 6 % NaCl),
8 % Kondensationsprodukt aus sulfoniertem Ditolylether mit Formaldehyd,
0,5 % Phosphatpuffer (pH 6,5) und
72,4 % Wasser

wurde in der gleichen Weise hergestellt wie in Beispiel V beschrieben.

Beispiel VIII

Eine Formulierung auf der Basis der nachstehenden Farbstoffe

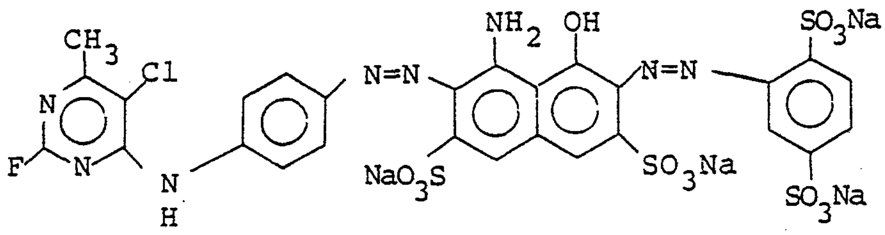

(VIII)

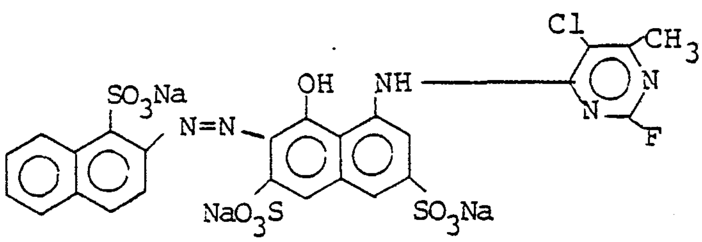

(IX)

und mit der nachstehenden Zusammensetzung

21,3 % Farbstoff (enthaltend 15 % NaCl),
4,8 % Farbstoff (enthaltend 10 % NaCl),
6,7 % Kondensationsprodukt aus sulfoniertem Ditolylether mit Formaldehyd,
0,5 % Phosphatpuffer (pH 6,5) und
66,7 % Wasser

wurde in der gleichen Weise hergestellt wie in Beispiel V beschrieben.

Beispiel IX

Eine Formulierung auf der Basis des nachstehenden Farbstoffs

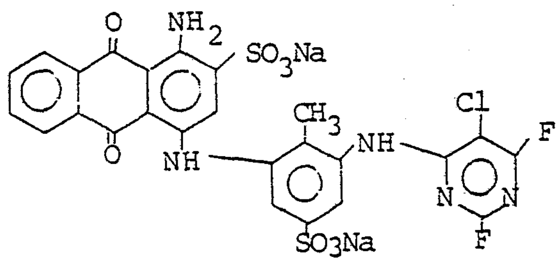

(X)

und mit der nachstehenden Zusammensetzung

26,4 % Farbstoff (enthaltend 20 % einer Mischung aus NaCl und $Na_2SO_4$),

10 % Dispergiermittel auf Ligninsulfonat-Basis,

0,5 % Phosphatpuffer (pH 6,5),

0,3 % Benzylalkohol als Konservierungsmittel und

62,8 % Wasser

wurde in der gleichen Weise hergestellt wie in Beispiel V beschrieben.

Beispiel X

Eine Formulierung auf der Basis des nachstehenden Farbstoffs

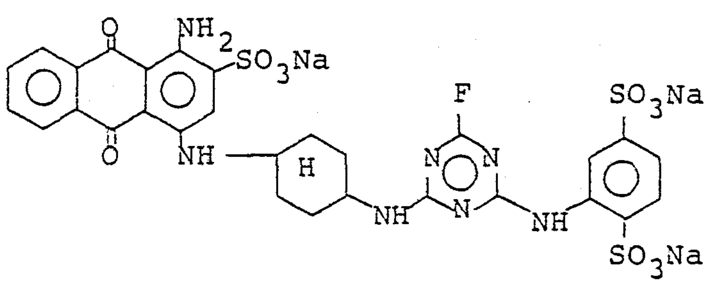

(XI)

und mit der nachstehenden Zusammensetzung

18,75 % Farbstoff (enthaltend 25 % einer Mischung aus NaCl und $Na_2SO_4$),
10 % Dispergiermittel auf Polyvinylpyrrolidon-Basis mit einem K-Wert von 30,
1 % Phosphatpuffer (pH 7) und
70,25 % Wasser

wurde in der gleichen Weise hergestellt wie in Beispiel V beschrieben.

Patentansprüche

1. Lagerbeständige, konzentrierte, fließfähige, wäßrige Dispersion mindestens eines kaltfärbenden Faser-Reaktivfarbstoffs mit überlegener kinetischer Löslichkeit, die

A) etwa zwischen 10 und 50 Gew.-% mindestens eines Farbstoffs mit einer mittleren Teilchengröße unter etwa 100 µm der allgemeinen Formel

$$(MO_3S)_n-Z-\underset{R^1}{\underset{|}{N}}-R \qquad (1)$$

,

in der

M $Li^+$, $Na^+$, $K^+$, $NH_4^+$ oder das Kation eines organischen Amins,

n eine ganze Zahl von 1 bis 5,

Z ein Farbstoff-Chromophor-System,

$R^1$ H oder Alkyl ($C_1$-$C_4$) und

R eine faserreaktive Gruppe einer der nachstehenden Strukturen

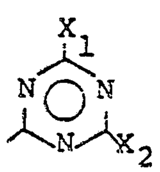 (2)

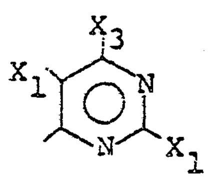 (3)

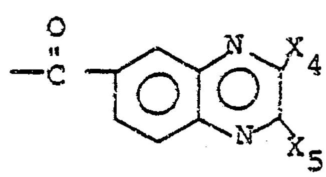 (4)

bezeichnen, in denen

$X_1$ = Cl, F (jedoch F, falls $X_2$ nicht F oder Cl ist),

$X_2$ = Cl, F, $NH_2$, $NHR^2$, $OR^2$, $SR^2$, $-CH_2R^2$,

$X_3$ = Cl, F, $CH_3$,

$X_4$ = Cl, F,

$X_5$ = Cl, F, $CH_3$,

mit der Maßgabe, daß in Formel (3) mindestens ein F einem der heterocyclischen Stickstoff-Atome benachbart ist, und worin

$R^2$ = Alkyl substituiert durch OH, $SO_3H$, COOH oder $C_1$- bis $C_4$-Alkoxy,
Aryl substituiert durch $SO_3H$, $C_1$- bis $C_4$-Alkyl oder $C_1$- bis $C_4$-Alkoxy,
Aralkyl substituiert durch $SO_3H$, $C_1$- bis $C_4$-Alkyl oder $C_1$- bis $C_4$-Alkoxy

bezeichnet,

B) eine genügende Menge eines Dispergiermittels ausgewählt aus der Gruppe anionischer Dispergiermittel und Vinylpolymerer, die aus Monomeren der Formel

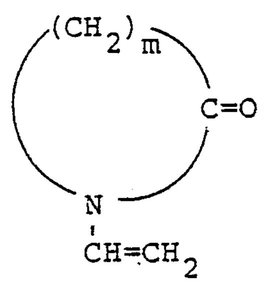 (5)

synthetisiert wurden, in der

m eine ganze Zahl von 3 bis 5 bezeichnet,

um ein wesentliches Absetzen oder eine wesentliche Agglomeration der Dispersion im Laufe von drei Wochen unter Temperaturcyclen von 20°C bis 50°C zu verhindern und

C) eine genügende Menge eines wasserlöslichen Elektrolyten, um eine wesentliche Hydrolyse der faserreaktiven Gruppen des dispergierten Farbstoffs im Laufe von drei Wochen unter Temperaturcyclen von 20°C bis 50°C zu verhindern,

enthält.

2. Dispersion nach Anspruch 1, dadurch gekennzeichnet, daß sie
   a) zwischen etwa 15 und 40 Gew.-% mindestens eines Farbstoffs der Formel (1),
   b) zwischen etwa 2 und 15 Gew-.% des Dispergiermittels und
   c) zwischen etwa 4 und 25 Gew.-% des Elektrolyten enthält.

3. Dispersion nach Anspruch 2, dadurch gekennzeichnet, daß sie zwischen etwa 0,1 und 3 Gew.-% eines Puffermittels enthält, das gegenüber den faserreaktiven Gruppen des dispergierten Farbstoffs inert ist.

4. Dispersion nach Anspruch 3, dadurch gekennzeichnet, daß sie zwischen etwa 2 und 15 Gew.-% des Dispergiermittels und zwischen etwa 0,2 und 1 Gew.-% des Puffermittels enthält.

5. Dispersion nach Anspruch 1 bis 4, dadurch gekennzeichnet, daß die Farbstoffe der Formel (1) entsprechen, in der
   a) M = $Li^+$, $Na^+$ oder $K^+$,
   b) n = eine ganze Zahl von 1 bis 4,
   c) Z = ein Farbstoff-Chromophor ausgewählt aus den Gruppierungen Mono- oder Polyazo-, Anthrachinon- und Phthalocyanin,
   d) R'= H oder $CH_3$ und
   e) R = eine faserreaktive Gruppe ausgewählt aus

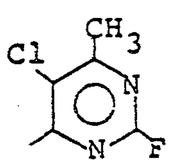 , 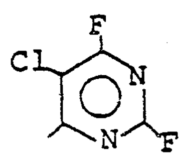 , 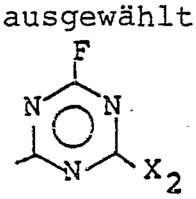 ,

und 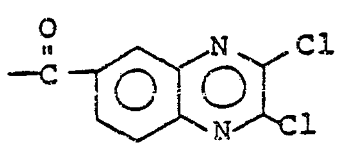 ,

worin $X_2$ die in Anspruch 1 angegebene Bedeutung hat.

6. Dispersion nach Anspruch 1 bis 4, dadurch gekennzeichnet, daß das Dispergiermittel ausgewählt ist aus
   a) Kondensationsprodukten aromatischer Sulfonsäuren mit Formaldehyd,
   b) Kondensationsprodukten von Ketonen mit Alkalimetallhydrogensulfiten und Formaldehyd oder
   c) Alkalimetall-ligninsulfonaten und deren Derivaten.

7. Dispersion nach Anspruch 1 bis 4, dadurch gekennzeichnet, daß das Dispergiermittel ein Polyvinylpyrrolidon mit einem K-Wert zwischen etwa 15 und 100 ist.

8. Dispersion nach Anspruch 3 oder 4, dadurch gekennzeichnet, daß der Puffer den pH auf einen Wert zwischen etwa 5 und 8 stabilisiert.

9. Dispersion nach Anspruch 3 oder 4, dadurch gekennzeichnet, daß
   a) das Dispergiermittel ein Alkalimetall-ligninsulfonat ist,
   b) der Elektrolyt ausgewählt ist aus LiCl, $Li_2SO_4$, NaCl, $Na_2SO_4$ und $(NH_4)_2SO_4$ sowie Gemischen aus diesen und
   c) der Puffer eine Mischung aus $KH_2PO_4$ und $K_2HPO_4$ ist.

10. Dispersion nach Anspruch 1 bis 4, dadurch gekennzeichnet, daß die mittlere Größe der dispergierten Teilchen zwischen etwa 1 und 50 µm liegt.

11. Dispersion nach Anspruch 10, dadurch gekennzeichnet, daß die mittlere Größe der dispergierten Teilchen zwischen etwa 1 und 10 µm liegt.

12. Wäßrige Dispersion mindestens eines faserreaktiven Farbstoffs, dadurch gekennzeichnet, daß sie

a) etwa zwischen 10 und 50 Gew.-% mindestens eines Farbstoffs der nachstehenden Konstitution

$$(MO_3S)_n-Z-\underset{R^1}{\underset{|}{N}}-R \qquad (1)$$

,

in der

M Li$^+$, Na$^+$, K$^+$, $NH_4^+$ oder das Kation eines organischen Amins,

n eine ganze Zahl von 1 bis 5,

Z ein Farbstoff-Chromophor-System,

$R^1$ H oder Alkyl ($C_1$-$C_4$) und

R eine faserreaktive Gruppe einer der nachstehenden Strukturen

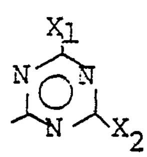 (2) 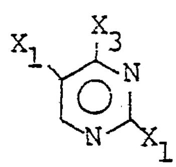 (3)

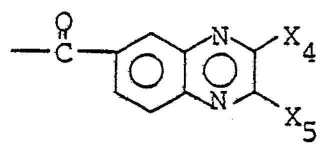 (4)

bezeichnen, in denen

$X_1$ = Cl, F (jedoch F, falls $X_2$ nicht F oder Cl ist),

$X_2$ = Cl, F, $NH_2$, $NHR^2$, $OR^2$, $SR^2$, $-CH_2R^2$,

$X_3$ = Cl, F, $CH_3$,

$X_4$ = Cl, F,

$X_5$ = Cl, F, $CH_3$,

mit der Maßgabe, daß in Formel (3) mindestens ein F einem der heterocyclischen Stickstoff-Atome benachbart ist, und worin

$R^2$ = Alkyl substituiert durch OH, $SO_3H$, COOH oder $C_1$- bis $C_4$-Alkoxy oder Aryl substituiert durch $SO_3H$, $C_1$- bis $C_4$-Alkyl oder $C_1$- bis $C_4$-Alkoxy oder Aralkyl substituiert durch $SO_3H$, $C_1$- bis $C_4$-Alkyl oder $C_1$- bis $C_4$-Alkoxy

bezeichnet, und

b) etwa zwischen 1 und 25 Gew.-% mindestens eines anionischen Dispergiermittels oder Vinylpolymeren, das aus dem Monomeren der nachstehenden Formel

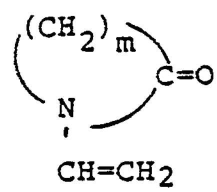

(5)

synthetisiert wurde, in der

m eine ganze Zahl von 3 bis 5 bezeichnet,

und einen K-Wert zwischen etwa 15 und 100 besitzt, und

c) etwa zwischen 1 und 30 Gew.-% eines wasserlöslichen Salz-Elektrolyten und

d) zwischen 0,1 und 3 Gew.-% mindestens eines Puffermittels, das gegenüber der faserreaktiven Gruppe des dispergierten Farbstoffs inert ist,

enthält.

13. Konzentrierte, fließfähige wäßrige Dispersion mindestens eines wasserlöslichen, kaltfärbenden Faser-Reaktivfarbstoff, die überlegene kinetische Löslichkeit besitzt und gegenüber einer in nennenswertem Umfang stattfindenden Hydrolyse der faserreaktiven Gruppen des Farbstoffs und gegenüber dem Absetzen oder einer Agglomeration desselben beständig ist, wenn sie während einer Dauer von drei Wochen der Einwirkung cyclischer Temperaturwechsel zwischen 50°C und 20°C ausgesetzt wird, dadurch gekennzeichnet, daß sie

a) etwa zwischen 10 und 50 Gew.-% mindestens eines Farbstoffs der nachstehenden Konstitution

$$(MO_3S)_n-Z-\underset{R^1}{\underset{|}{N}}-R \qquad (1)$$

,

in der

M das Kation von Li, Na oder K,

n eine ganze Zahl von 1 bis 4,

Z ein Farbstoff-Chromophor ausgewählt aus Mono- oder Polyazo-, Anthrachinon- und Phthalocyanin,

$R^1$ H oder ein $C_1$- bis $C_4$-Alkyl und

R eine faserreaktive Gruppe ausgewählt aus

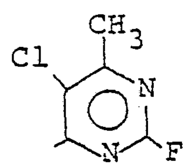 , 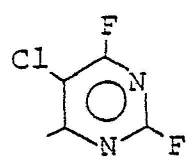 , 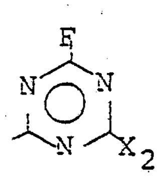 ,

und 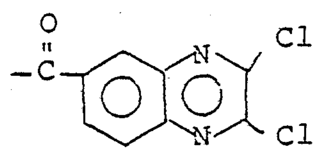

bezeichnen, worin $X_2$ die in Anspruch 1 angegebene Bedeutung hat.

b) zwischen 2 und 5 Gew.-% eines Natriumligninsulfonat-Dispergiermittels, das

i) einen niedrigen oder fehlenden Zucker-Gehalt,

ii) ein Molekulargewicht zwischen etwa 5 000 und 50 000 und

iii) zwischen etwa 0,5 und 5 Sulfonsäure-Gruppen auf 1 000 Molekulargewichts-Einheiten

besitzt,

c) zwischen 4 und 25 Gew.-% eines Alkalimetall- oder Ammoniumsalzes einer anorganischen Säure und

d) zwischen 0,2 und 1 Gew.-% eines Puffermittels, das inert gegenüber der faserreaktiven Gruppe des dispergierten Farbstoffs ist, wobei das Puffermittel den pH der Dispersion auf einen Wert zwischen etwa 5 und 8 stabilisiert,

enthält, wobei die Dispersion eine mittlere Teilchengröße zwischen etwa 1 und 10 µm und eine Viskosität bei 20°C von weniger als 5000 cP besitzt.

14. Verfahren zum Färben von Substraten, die natürliche oder regenerierte Cellulosefasern oder Wollfasern enthalten, dadurch gekennzeichnet, daß die Dispersion nach den Ansprüchen 1 bis 4, 12 oder 13 einem wäßrigen Färbebad zugesetzt wird und Temperatur und pH so eingestellt werden, daß die faserreaktiven Gruppen des dispergierten Farbstoffs mit den Hydroxylamin- oder Amid-Gruppen des Substrats zur Reaktion gebracht werden.

15. Dispersion nach Anspruch 1 bis 4 oder 12, dadurch gekennzeichnet, daß sie eine Viskosität bei 20°C von weniger als 5000 cP besitzt.